**Europäisches Patentamt**

**European Patent Office**

**Office européen des brevets**

(19)

(11) Veröffentlichungsnummer: **0 247 416**
**B1**

(12) **EUROPÄISCHE PATENTSCHRIFT**

(45) Veröffentlichungstag der Patentschrift: **16.08.90**

(21) Anmeldenummer: **87106748.4**

(22) Anmeldetag: **08.05.87**

(51) Int. Cl.⁵: **H 02 P 6/02, G 11 B 15/473**

(54) **Gleichlauf- und Bremssteuerung.**

(30) Priorität: **17.05.86 DE 3616845**

(43) Veröffentlichungstag der Anmeldung:
**02.12.87 Patentblatt 87/49**

(45) Bekanntmachung des Hinweises auf die
Patenterteilung:
**16.08.90 Patentblatt 90/33**

(84) Benannte Vertragsstaaten:
**AT BE CH DE ES FR GB GR IT LI LU NL SE**

(56) Entgegenhaltungen:
**EP-A-0 097 916**
**EP-A-0 224 211**
**CH-A- 527 513**
**DE-A-3 307 324**
**US-A-4 347 536**

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **Gleim, Günter, Dipl.-Ing.
Oberer Sonnenbühl 22
D-7730 Villingen 22 (DE)**

(74) Vertreter: **Einsel, Robert, Dipl.-Ing.
Deutsche Thomson-Brandt GmbH Patent- und
Lizenzabteilung Göttinger Chaussee 76
D-3000 Hannover 91 (DE)**

## Beschreibung

Für die Erzeugung von axialen Hubbewegungen eines rotierenden Körpers, z.B. einer Kopftrommel oder eines Kopfrades in einem Videorecorder, ist es aus EP—A—0 224 211 (reröffeutlicht am 3.06.1987) bekannt, zwei gleichartige Motore, z.B. elektronisch kommutierte Gleichstrommotore zu verwenden, die über eine axiale Spindel miteinander mechanisch verbunden sind. Ein Motor bewirkt die Rotation der Kopftrommel, welche fest mit dessen Motorwelle verbunden ist. Diese Motor ist in axialer Richtung verschiebbar auf einem Schlitten oder auf einem Gestänge angeordnet. Bei exakt gleicher Drehzahl des zweiten ortsfesten Motors rotiert die Kopftrommel in einer Ebene, ohne daß eine Relativbewegung der Motore zueinander erfolgt. Wird dagegen der zweite Motor geringfügig in seiner Drehzahl relativ zur Kopfraddrehzahl verändert, ergibt sich durch die gemeinsame Spindel eine axiale Relativbewegung zwischen den beiden Motoren. Diese Bewegung, auch Hub genannt, ist abhängig von der Steigung der Spindel und der Drehzahldifferenz der beiden Motore.

Während des Betriebes wird durch elektronische Steuerung beider Motore sichergestellt, daß eine unbeabsichtigte Hubänderung nicht möglich ist. Beim Abschalten des Gerätes und damit Stromlossetzen der Motore würden sich dagegen unterschiedliche Auslaufdrehzahlen der beiden Motore z.B. durch unterschiedliche rotierende Massen, unterschiedliche Reibungen und Belastungen einstellen, wodurch eine unbeabsichtigte Hubbewegung erfolgt, die unter Umständen zur Zerstörung des Gerätes führen kann.

Es ist Aufgabe der Erfindung, ein derartiges unbeabsichtigtes Auseinanderlaufen der Auslaufdrehzahlen zweier miteinander zusammenwirkender Motore während eines Abschaltvorganges zu vermeiden und den Auslaufvorgang zu beschleunigen.

Die Aufgabe wird gemäß der Erfindung durch die im Anspruch 1 aufgeführten Merkmale gelöst. Weiterbildungen der Erfindung sind in den Unteransprüchen gekennzeichnet.

Im Prinzip werden die einzelnen einander entsprechenden Wicklungen der beiden gleichartigen Motore für den Auslaufvorgang nach dem Abschalten, zueinander parallel geschaltet. Für die Parallelschaltung werden die einzelnen Wicklungen während des Auslaufvorganges so gepolt, daß bei gleicher Drehzahl die generierten Spannungen gleiche Richtung aufweisen. Solange die Drehzahlen gleich groß sind, sind die einzelnen Teilspannungen in Phase und eine unbeabsichtigte Relativänderung der Drehzahlen zueinander kann nicht erfolgen. Läuft allerdings, durch unterschiedliche rotierende Massen bedingt, die Drehzahl auseinander, ergeben sich Phasendifferenzen, d.h. es werden Spannungen erzeugt, die in Teilabschnitten in Gegenphase zueinander sind. Dies Gegen-EMK bewirkt eine nahezu abrupte Bremswirkung auf beide Motore, so daß die Möglichkeit einer unbeabsichtigten relativen Drehzahlabweichungen der Motore zueinander nach dem Abschaltvorgang vermieden wird.

Die Erfindung wird im folgenden in einem Ausführungsbeispiel anhand der Zeichnungen näher erläutert. Darin zeigen:

Fig. 1 eine konstruktive Anordnung zweier mittels Gewindespindel mechanisch gekuppelter Motore zur Huberzeugung für eine Kopftrommel

Fig. 2 eine Schaltung der erfindungsgemäßen Gleichlauf- und Bremssteuerung

Fig. 3 Spannungsverläufe in den Motorwicklungen.

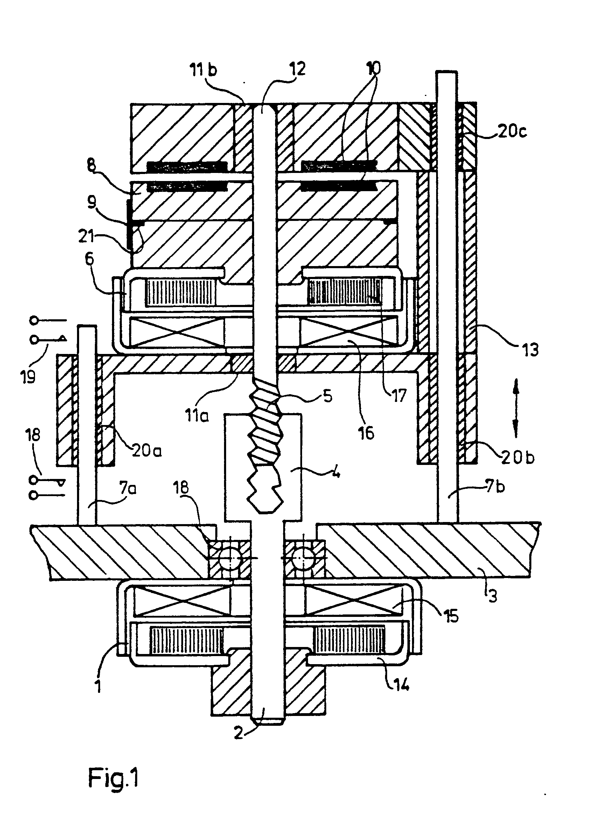

Fig. 1 zeigt eine konstruktive Anordnung zweier mittels Gewindespindel mechanisch gekuppelter Motore 1, 6 zur Huberzeugung für eine Kopftrommel 8. Die Kopftrommel 8 bildet mit Motor 6 eine Einheit, die verschiebbar über Gleitlager 20a, 20b, 20c auf einem Gestänge 7a, 7b gelagert ist. Im feststehenden Teil von Motor 6 sind die elektronisch kommutierbaren Spulen 16 angeordnet, die mit den entsprechenden elektronisch kommutierten Spulen 15, des den Hub erzeugenden Motors 1, während des Ausschaltvorganges parallel geschaltet werden. Die Kopftrommel 8 ist mit der Welle 12 und dem Rotor von Motor 6, an welchem die Magnete 17 befestigt sind, fest verbunden. Die Welle 12 ist in den Gleitlagern 11a, 11b gelagert. Sie trägt an ihrem freien Ende eine Gewindespindel 5. Diese ragt in eine Gewindebuchse 4, die mit der Welle 2 und Rotor 14 von Motor 1 fest verbunden ist. Motor 1 ist mit dem Chassis 3, welches auch das Gestänge 7 trägt, ortsfest verbunden.

An die Kopftrommel 8 ist ein Magnetband 9 angelegt, welches mit einem Magnetkopf 21 in Berührung steht. Die aufzuzeichnenden bzw. abgegebenen Signale werden vom Magnetkopf 21 und die Wicklungen eines Drehübertragers 10 weitergeleitet, dessen feststehender Teil über das Verbindungteil 13 mit dem feststehenden Teil von Motgor 6 verbunden ist.

Wenn beide Motore 1 und 6 bei gleicher Drehrichtung gleich große Umdrehungsgeschwindigkeiten aufweisen, ist der mechanische Abstand der Motore voneinander konstant. Führt dagegen Motor 1 geringfügige, z.B. sinusförmige verlaufende Drehzahländerungen gegenüber der Drehzahl von Motor 6 aus, wird Motor 6 und damit die Kopftrommel über Buchse 4 und Spindel 5 in Pfeilrichtung verschoben. Somit werden auf dem Magnetband 9, welches ortsfest zum Chassis 3 geführt ist, vom Magnetkopf 21 nebeneinderliegende, parallel zueinander verlaufende Magnetspuren entsprechend der EP—A—0 224 211 geschrieben. Aus der Figur ist zu erkennen, daß nach einem Abschaltvorgang ohne elektronische Steuerung unterschiedliche rotierende Massen an den Wellen der Motore 1 und 6 wirken, so daß ohne besondere Maßnahmen durch die Spindel 4, 5 eine Hubbewegung bewirkt wird, die zur Verstörung der Anordnung führen kann. Um diese zu vermeiden, kann bei einer Hubüberschreitung durch die Endschalter 18 und 19 z.B. ein Abschaltvorgang für beide Motor ausgelöst werden, bei dem gleichzeitige die einzelnen Wick-

2

lungen der Motore 1 und 6 parallel geschaltet werden.

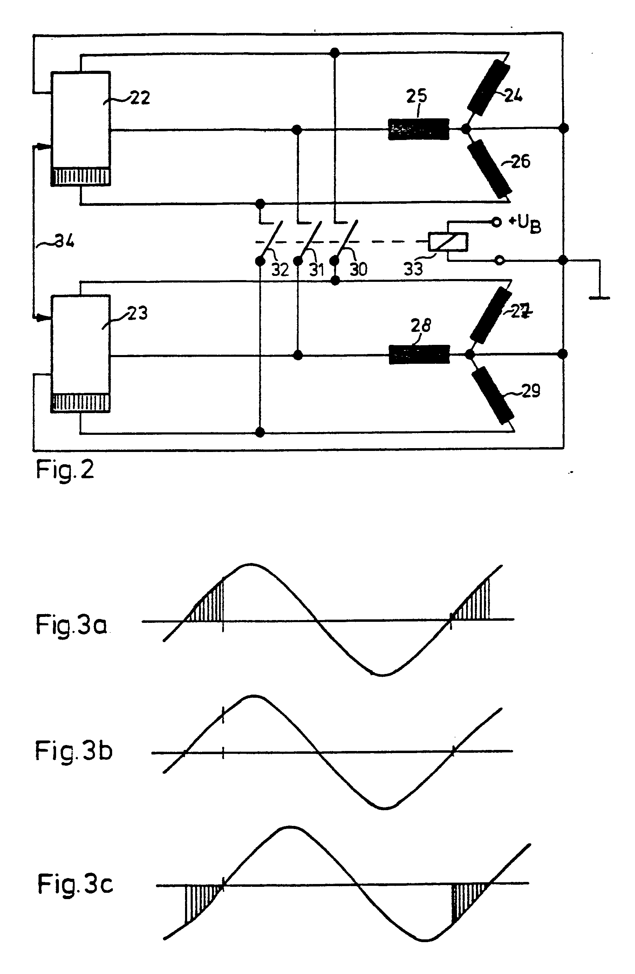

Fig. 2 zeigt eine Schaltung der erfingungsgemäßen Gleichlauf- und Bremssteuerung. Es sind die Wicklungen 24, 25 und 26 eines ersten, dreisträngigen, durch das Steuergerät 22 in seiner Drehzahl steuerbaren Motors in Sternschaltung dargestellt, der über eine in Fig. 1 gezeigten Spindel mit einem zweiten Motor mit den Wicklungen 27, 28, und 29 mechanisch gekoppelt ist. Der zweite Motor entspricht in seinem Aufbau und seiner Schaltung dem ersten Motor. Er wird ebenfalls elektronisch durch Steuergerät 23 in seiner Drehzahl gesteuert. Beide Steuergeräte sind über eine Leitung 34 miteinander verbunden, wodurch im Betrieb ein gewünschter Abgleich der beiden Drehzahlen zueinander erfolgen kann.

Im Abschalt- oder Störungsfalls z.B. durch Ausfall des Netzes ist eine Nachsteuerung nicht mehr gegeben, so daß die Motore unterschiedliche Drehzahlen annehmen würden. Dieser Zustand wird verhindert durch die Schalter 30, 31 und 32 von Relais 33, die im Betriebszustand geöffnet sind und bei Fehlen einer Spannung +UB am Relais 33 geschlossen werden. Durch das Schließen der Schalter 30, 31 und 32 wird Spule 24 vom ersten Motor mit Spule 27 vom zweiten Motor, Spule 25 vom ersten Motor mit Spule 28 vom zweiten Motor und Spule 26 vom ersten Motor mit Spule 29 vom zweiten Motor parallel geschaltet. Durch die Parallelschaltung werden während des Auslaufvorganges Spannungen erzeugt, wie sie Fig. 3 zeigt.

Fig. 3a zeigt z.B. den Spannungsverlauf in Spule 24 im Abschaltmoment und Fig. 3b den Verlauf in der parallelgeschalteten Spule 27 im Abschaltmoment. Beide Spannungen sind bei gleicher Drehzahl in Phase, so daß keine Relativbewegung zwischen den beiden Motoren stattfinden kann. Wird dagegen die Drehzahl eines Motors z.B. durch unterschiedliche Schwungmassen während des Auslaufvorganges gegenüber der Drehzahl des anderen Motors verändert, zeigt sich z.B. eine Phasenverschiebung, wie sie in Fig. 3c gegenüber 3a und 3b dargestellt ist. In diesem Zustand sind die Spannungen im schraffierten Bereich gegeneinander gerichtet, wodurch eine elektrische Bremsung durch die Gegen-EMK erfolgt. Je weiter die Phasen voneinander abweichen, um so stärker ist die Bremswirkung, d.h. die Bremsung ist nahezu abrupt, so daß unerwünschte Relativbewegungen zwischen den beiden Motoren vermieden werden.

Beispielhaft sind die Motorwicklungen in Sternschaltung dargestellt. Aber auch bei Dreieckschaltung der Wicklungen ist es möglich, bei Fehlen eine Versorgungsspannung eine Parallelschaltung einander entsprechender Wicklungen mit Hilfe der Relaiskontakt durchzuführen.

## Patentansprüche

1. Gleichlauf- und Bremssteuerung für zwei gleichartige Motore (1, 6), insbesondere elektronische kommutierte, mit Permanentmagneten versehene Gleichstrommotore, deren Wellen (12, 2) miteinander zusammenwirken, wobei Mittel (30—33) vorgesehen sind, durch die nach Stromlosschaltung der Motore eine Parallelschaltung gleichartiger Motorwirklungen (24, 25, 26; 27, 28, 29) erfolgt.

2. Gleichlauf- und Bremssteuerung nach Anspruch 1, wobei als Mittel für die Parallelschaltung Schaltkontakte (30, 31, 32) eines Relais (38) Verwendung finden, die bei fehlender Spannung an der Relaisspule geschlossen sind.

3. Gleichlauf- und Bremssteuerung nach Anspruch 1 oder nach Anspruch 2 wobei die Stromlosschaltung bei detektierten Störungsfällen erfolgt.

4. Gleichlauf- und Bremssteuerung nach Anspruch 1, wobei die Wellen der Motore über ein Gewinde (4, 5) gekoppelt sind.

## Revendications

1. Commande de synchronisation et de freinage pour deux moteurs de même type (1, 6), en particulier pour des moteurs à courant continu commutés électroniquement, équipés d'aimants permanents, dont les arbres (12, 2) coopèrant l'un avec l'autre, des moyens (30—32) étant prévus grâce auxquels il est réalisé, après mise sans courant des moteurs, un montage en parallèle des enroulements de moteur de même type (24, 25, 25; 27, 28, 29).

2. Commande de synchronisation et de freinage selon la revendication 1, des contacts de commutation de commande (30, 31, 32) d'un relais (33), qui sont formés à la bobine du relais en cas de défaillance de tension, étant utilisés comme moyens pour le montage en parallèle.

3. Commande de syncronisation et de freinage selon la revendication 1 ou selon la revendication 2, la mise sans courant étant effectuée lorsque des dérangements sont détectés.

4. Commande de synchronisation et de freinage selon la revendication 1, les arbres des moteurs étant couplés par un filet (4, 5).

## Claims

1. A synchronizing and braking control for two like motors (1, 6), particularly electronically commutated direct-current motors which are provided with permanent magnets and the shafts (12, 2) of which cooperate with one another, wherein means (30—32) are provided whereby, after the current to the motors has been switched off, a parallel connection of like motor windings (24, 25, 26; 27, 28, 29) is effected.

2. A synchronizing and braking control according to Claim 1, wherein switching contacts (30, 32, 32) of a relay (33) are used as means for the parallel connection, which contacts are closed in the absence of voltage at the relay coil.

3. A synchronizing and braking control according to Claim 1 or according to Claim 2 wherein the switching off of the current is effected in cases

where disturbances are detected.

4. A synchronizing and braking control according to Claim 1, wherein the shafts of the motors are coupled via a screw thread (4, 5).

Fig.1

Fig. 2

Fig. 3a

Fig. 3b

Fig. 3c

2